# EUROPEAN PATENT APPLICATION

(11) **EP 1 469 650 A1**
(43) Date of publication of application: **20.10.2004**
(21) Application number: 02750755.7
(22) Date of filing: 26.06.2002
(51) Int. Cl.: H04L 29/02, H04Q 7/32

(54) **METHOD AND SYSTEM FOR WIRELESS DATA COMMUNICATION IN DATA PROCESSING SYSTEM**

(30) Priority: 26.01.2002 CN 02114797
(71) Applicant: Netac Technology Co., Ltd., Shenzhen, Guangdong 518031 (CN)
(72) Inventor: DENG, Guoshun 6A Blk. 2. Jindicuiyuan, Shenzhen Guangdong 518048 (CN); CHENG, Xiaohua, Beijing 101101 (CN); XIANG, Feng, Shenzhen Guangdong 518026 (CN)
(74) Representative: Molyneaux, Martyn William
(86) International application number: PCT/CN2002/000443
(87) International publication number: WO 2003/063440

(57) **Abstract**

A method of wireless data communication in a data processing system comprise the steps of providing a wireless data communication device, in which installed are a wireless transceiver module for receiving and transmitting data information, and a controller and an interface module for controlling the wireless data communication device; establishing an information exchange channel between the device and the data processing system based on a serial or parallel connection or wireless communication interface; wherein the wireless data communication device transmits or receives the data information through the wireless transceiver module via a public wireless network. The device is connected with a variety of data processing equipments, such as, a computer host, through a variety of interfaces, and has a wireless transceiver module which can receive or transmit information through a mobile telephone network, uses directly communication services provided by the mobile telephone network company, and thus has the advantages of being online at any time but at low cost. It can also connect to the Internet for transmitting and receiving information so as to realize wireless access to the Internet.

## Description

### TECHNICAL FIELD

The present invention relates to transmission of data information, more particularly to a method for a data processing system using a public wireless network to communicate and a device thereof.

### BACKGROUND ART

The rapid development of the computer technique and Internet brings us into the information age. However, the computer and Internet need to be connected through a public telephone switching network or through other private network interface. This is not convenient for people traveling who is anxious to send or receive information, but cannot find any usable network connection. The prevalence of mobile telephones provides people with a clairaudient of the fable, and the short message service of the mobile telephone has also met the usual communication requirement. However, people have various needs for the information service, for instance, a security firm needs to inform its clients promptly the instantaneously changing information of stock market, a bank needs to exchange financing information with respective banking branches instantaneously and securely. Such stock market and financial information need to be exchanged through network transmission, and sometimes need to be stored conveniently for people to study repeatedly.

### SUMMARY OF THE INVENTION

The object of the present invention is to provide a method and device of wireless data communication of a data processing system to overcome the aforesaid defects in the prior art, that is a method and device of enabling the data processing system to receive and transmit the information through a public wireless network, and the method and device have a storage function and the subscribers' identification codes.

The object of the present invention can be achieved by the technical solution below:

In accordance with the present invention, a method of wireless data communication of a data processing system comprises the following steps of:
A. providing a wireless data communication device, in which installed are a wireless transceiver module capable of receiving or transmitting data information, and a controller module for controlling the wireless data communication device and an interface module; physically, the various modules can be present separately, and also be integrated into one or two modules;
B. establishing an information exchange channel between the wireless data communication device and the data processing system based on a serial, parallel or wireless communication interface; and
C. the wireless data communication device using the wireless transceiver module to transmit or receive the data information through a public wireless network.

The present invention further includes a step D of installing a storage media module in the wireless data communication device that enables the wireless data communication device to achieve the external storage function of the data processing system.

The present invention further comprises a step E of providing the wireless data communication device with an identification codes that are stored in the identity code module.

The present invention further comprises a step F of providing a driver of the wireless data communication device in the data processing system for controlling and driving the wireless data communication device.

The serial or parallel or wireless communication interface of the present invention is USB (Universal Serial Bus), IEEE1394, PCMCIA, CP or Bluetooth interface.

The public wireless network used in the present invention is GSM, GPRS, CDMA, WCDMA, CDMA2000 or CDPD network.

The operational power supply of the wireless data communication device of the present invention is connected via the serial or parallel interface.

The present invention has the function of indicating the operation state of the wireless data communication device that is achieved by the indicating element on an operation state indicating module.

The indicating element of the present invention is a LED, LCD, vibrator or sounder.

The present invention is further designed with write protection function to prevent data from being written into the storage media module.

A narrow slot is designed on the wireless data communication device of the present invention. An electrical contact in the slot is used for the insertion of the SIM (Subscriber Identity module) card, and a manipulative point is set beside the narrow slot. Pressing the manipulative point can spring the inserted SIM card out.

In accordance with the present invention, a wireless data communication device of a data processing system comprises a serial, parallel or wireless communication interface module for connecting the data processing system and the wireless data communication device, a controller module, and a wireless transceiver module, wherein the controller module is connected with the interface module and the wireless transceiver module, and supports the flow of data information, and the controller module coordinates the operation of the various modules.

The present invention also comprises a storage media module, and uses a flash memory preferably.

The present invention further comprises an identification code module for storing identification codes.

The serial or parallel or wireless communication interface of the present invention is USB, IEEE1394, PCMCIA, CF or Bluetooth interface.

The operational power supply of the wireless data communication device of the present invention is connected via the serial or parallel interface.

The present invention includes an indicating element for indicating the operation state of the wireless data communication device.

The indicating element of the present invention is a LED, LCD, vibrator or sounder.

The present invention further comprises a write protection switch for preventing the data from being written into the storage media module.

A narrow slot is designed on the wireless data communication device of the present invention. An electrical contact, a lever and a spring in the slot are used for inserting and electrically connecting the SIM card, and a manipulative point is set beside the narrow slot. Pressing the manipulative point can spring the inserted SIM card out.

The present invention has the following advantages in comparison with the prior art.

The present invention may connect with various data processing devices, such as a computer host, through various interfaces, and has wireless receive and transmit modules, whereby enabling receiving and transmitting the information through the wireless telephone network, and using the communication service provided by the mobile telephone company (e.g. China Mobile company, China Unicom company), such as, short message, voice, data communication and the like. It has the advantages of covering wide regions, being online at any moment and the low cost. The present invention can also be connected with Internet to transmit or receive information so as to achieve the functions of wireless access.

The present invention has the following advantages as well: it has an identification code that can be used as an electronic identification card, which can be called upon directly from the application program, and can also achieve the encryption or recognition of the communication data or the device itself. The present invention can also have the storage function, and can let the wireless data communication device achieve the external storage function of the data processing system, can input, output and storage various kinds of information by virtue of the data processing system, and can also store the application software and data flexibly and conveniently. The present invention can associate with the advanced technique, such as USB, IEEE1394, PCMCIA, CP, Bluetooth, flash memory and wireless communication etc., combine the mobile communication and mobile storage technique properly, and provide a new method of using the public wireless network to exchange or store the information. The manufactured product has a small volume and a light weight, which can achieve the crossover data transfer among devices such as wireless mobile telephones and computers, and has the excellent and reliable performance of the storage and wireless communication. The present invention has the data format of USB interface mapped onto the data format of the RS232 serial interface such that the conventional application program based on the serial port can be applied to the present invention theoretically without any modification. It has unparalleled advantages when compared with the conventional storage communication products in terms of safety, facility, universality and portability. One data processing system can carry several devices of the present invention so as to improve the availability of the device, increase the throughput of the input and output of the system, transmit and receive information in batches without block. Such functions are suitable for the use of group users.

Further, the present invention further has the following advantages: including the function of transmitter and receiver, the functions of transferring voice signals to electrical signals, or transferring electrical signals to voice signals, and sending them out through the speaker.

### BRIEF DESCRIPTION OF THE DRAWINGS:

FIG.1 is a schematic block diagram of the technical solution according to the present invention;
FIG.2 is a circuit schematic diagram of the power supply module 1;
FIG.3 is a circuit schematic diagram of operation state indicating module 2;
FIG. 4 is a circuit schematic diagram of the identification code module 3;
FIG. 5 is a circuit schematic diagram of the interface 4 of the SIM card;
FIG. 6 is a circuit schematic diagram of the USB HUB module 6;
FIG. 7 is a circuit schematic diagram of the wireless data communication control module in the controller module 17;
FIG. 8 is a circuit schematic diagram of the wireless transceiver module 8 using Siemens TC35 module;
FIG. 9 is a circuit schematic diagram of the wireless transceiver module 8 using Wavecom WIS02C module;
FIG.10 is a circuit schematic diagram of the wireless transceiver module 8 using UbiNetics GM400/GM401 module;
FIG. 11 is a circuit schematic diagram of the storage media control module in the controller function module 17;
FIG. 12 is a circuit schematic diagram of the storage media module 11;
FIG. 13 is a schematic diagram of the positions of the driver and the firmware in the application system according to the present invention.
FIG. 14 is a flow diagram of a first firmware according to the present invention;

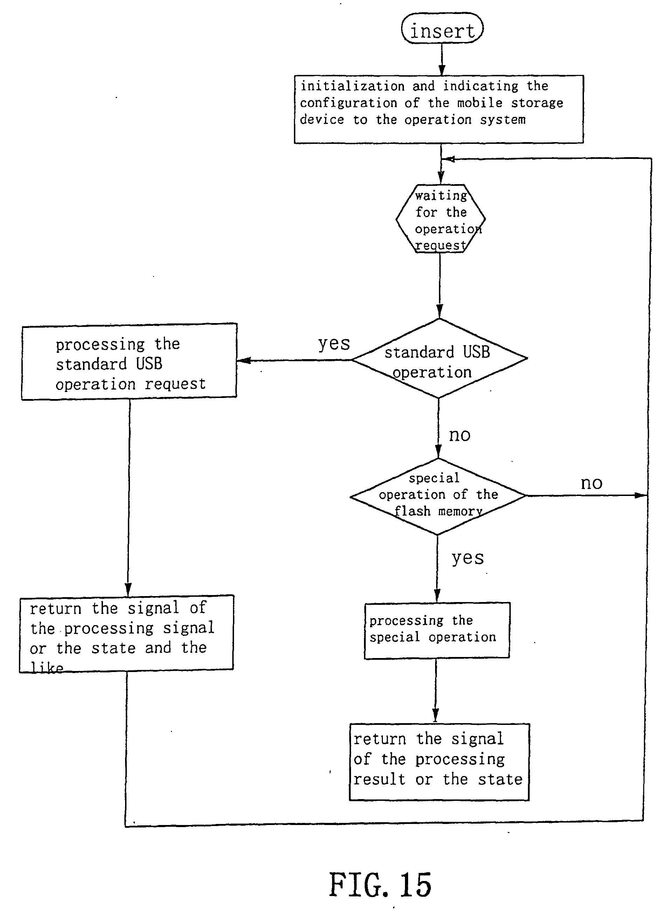

FIG. 15 is a flow diagram of a second firmware according to the present invention;
FIG. 16 is a flow diagram of a second driver according to the present invention;
FIG. 17 is a typical network diagram using the present invention;
FIG. 18-1∼FIG. 18-3 are schematic diagrams of the insertion structure of the SIM card according to the present invention.

### DETAIL DESCRIPTION OF PREFERRED EMBODIMENTS

The preferred embodiment will be further described in detail in conjunction with the accompanying drawings.

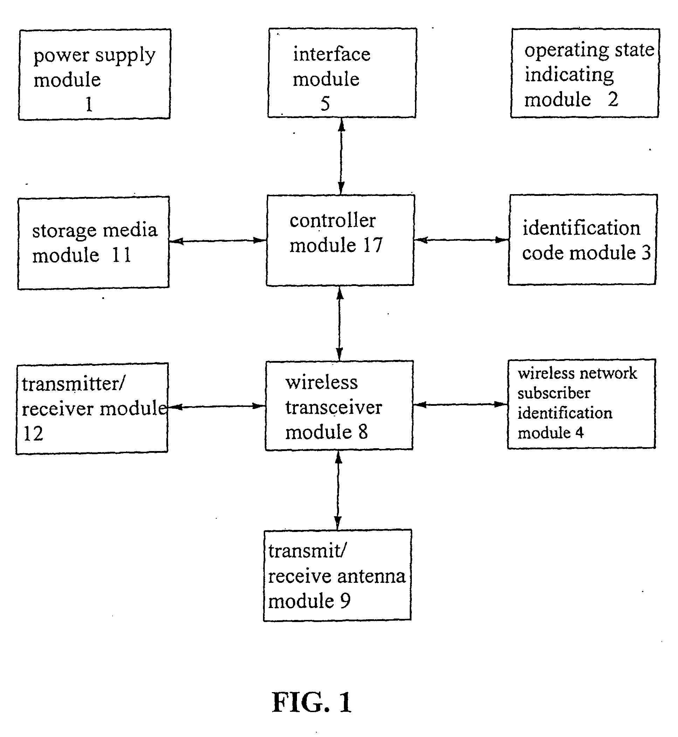

A method of wireless data communication of a data processing system, as shown in fig.1, comprises the following steps of:
A. Providing a wireless data communication device, in which installed are a wireless transceiver module 8 capable of receiving and/or transmitting data information, and a controller module 17 and an interface module 5 for controlling the wireless data communication device, wherein physically the various modules can be present separately, and can also be integrated into one or two modules;
B. establishing information exchange channel between the wireless data communication device and the data processing system based on a serial, parallel or wireless communication interface;
C. the wireless data communication device using the wireless transceiver module 8 to transmit or receive the data information via the public wireless network;
D. installing a storage media module 11 in the wireless data communication device to provide the wireless data communication device with the external storage function of the data processing system;
E. providing the wireless data communication device with identification codes that are stored in the identification code module 3; and
F. providing a driver for the wireless data communication device in the data processing system for controlling and driving the wireless data communication device.

The serial or parallel or wireless communication interface of the present invention is USB, IEEE1394, PCMCIA, CP or Bluetooth interface. The public wireless network includes GSM, GPRS, CDMA, WCDMA, CDMA2000 or CDPD network. The operational power supply of the wireless data communication device is connected via the serial or parallel interface. The function of indicating the wireless data communication device of the present invention is achieved by an indicating element on the operating mode indicating module. The indicating element is LED, LCD, vibrator or sounder. The present invention is designed with the write protection function to prevent the data from being written into the storage media module 11. The operational power supply of the wireless data communication device is connected from the battery or external power supply when using the Bluetooth interface. A narrow slot is designed on the wireless data communication device in the present invention. An electrical contact in the slot is used for the insertion of the SIM (Subscriber Identity module) card, and a manipulative point is set beside the narrow slot. Pressing the manipulative point can spring the inserted SIM card out.

As shown in Fig.1, a wireless data communication device of the data processing system, comprises a serial, parallel or wireless communication interface module 5 for connecting the data processing system and the data communication device, a controller module 17, and a wireless transceiver module 8, wherein the controller module 17 is connected with the interface module 5 and the wireless transceiver module 8, and supports the flow of data information; and the controller module 17 coordinates the operation of various modules.

The device also includes a storage media module 11, and uses a flash memory preferably. The present invention includes an identification code module 3 for storing the identification codes. The identification code is the only serial number or character string of the present invention device, and can be the electrical identification card of the device, written into the device as a firmware, and also modified. The identification code can also be a group of series numbers or character strings.

The serial, parallel or wireless communication interface of the device includes USB, IEEE1394, PCMCIA, CF or Bluetooth interface. The operational power supply is connected via the serial or parallel interface. The present invention further includes an indicating element for indicating the operating state of the wireless data communication device. The indicating element of the present invention is a LED, LCD, vibrator or sounder. The present invention also includes a write protection switch for preventing the data from being written into the storage media module 11.

The data processing system of the present invention refers generally to various electronic devices capable of processing data, including but not limiting to various personal computers, minicomputers, data processing workstations and various private data processing systems requiring the external storage devices.

The hardware structure of the present invention can be separated into a plurality of modules as shown in Fig.1. The main functions of various primary modules are described respectively hereinafter.

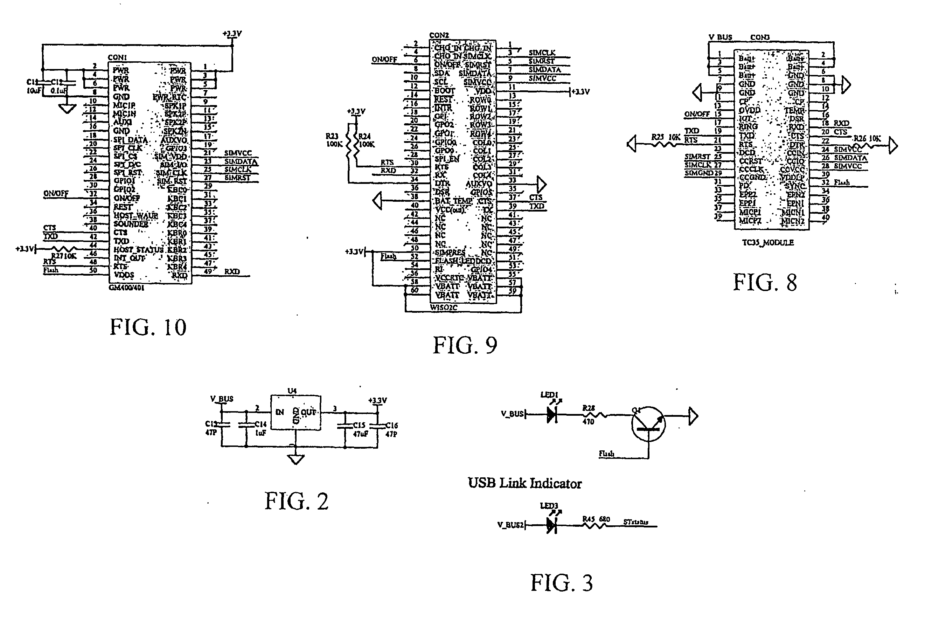

The power supply module 1 provides the power to the wireless data communication device of the present invention, and converts the direct-current +5V power supply provided by the host USB bus into +3.3V to meet the power requirements of the operation of the storage media module and wireless transceiver module. For simplifying the lines in the drawing, all connection lines between the power supply 1 and other modules are omitted in Fig.1. As shown in Fig. 2, V_BUS is a direct-current +5V power supply provided for the USB bus of the host, which is then converted into 3.3V power supply by the chip U4 and the parallel connected filtering capacitors C13, C14, C15, C16.

The operation state indicating module 2 of the present invention provides the wireless transceiver operation state indication and the interface connection state indication. The main functions of this module include two portions, one of which portion indicates the operation state of the wireless transceiver module while searching the network and transmitting/receiving the information, and the other portion indicates whether the connection between the wireless data communication device of the present invention and the interface is operating normally. For simplifying the drawing, the connection lines between the operating indicating module 2 and other modules are omitted in Fig.1. As shown in Fig.3, a flash signal from the wireless transceiver module 8 inputs to the base electrode of the transistor Q1, and V_BUS provides the power, to control the light-emitting diode LED 1 to indicate the wireless transmitting/receiving operation state. The STstatus signal from the controller module 17 and V_BUS 2+5V power supply control the light-emitting diode LED 3 to indicate the connection state of the interface (e.g., USB). The operating state indicating module 2 includes an indicating element, which is a LED, LCD, vibrator or sounder.

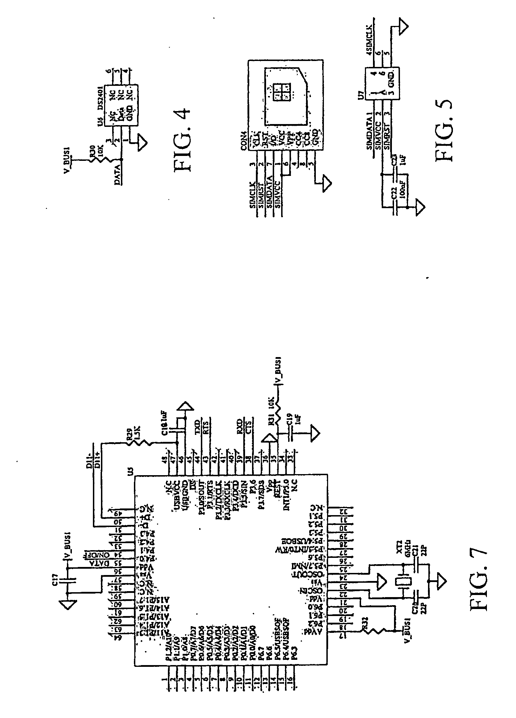

The identification code module 3, in which the identification code can be the only serial number or character string, can be used as the electronic identification card of the device of the present invention, and can provide an encryption key for an encryption/decryption algorithm. The identification code module 3 can be connected with the controller module 17 in the mode of a single bus. As shown in Fig.4, this module uses DS2401 chip U6, and V_BUS1 direct-current +5V provides the power. The identification code can be affirmed in the device, and also can be modifiable. The identification code can be a group of serial numbers or character strings as well.

The main function of the wireless network subscriber identification module 4 is to provide a standard interface between the wireless transceiver module 8 and the wireless network subscriber identification module. The identification card can be, but not limited to, SIM (Subscriber Identity Module) card, which is mainly used to store the relative information of the subscriber. The module 4 is connected to the wireless transceiver module 8 through the identification card interface. As shown in Fig. 5, the module uses SIM card socket CON4 and an anti-interference chip U7, the pins of SIMDATA, SIMVCC, SIMRST of CON4 and U7 are connected with the wireless transceiver module 8 in parallel. The module 4 and the wireless transceiver module 8 are two separate modules, but can be integrated.

The interface module 5 provides a serial, parallel or wireless communication interface for connecting the data processing system and the wireless data communication device. The serial, parallel or wireless communication interface is USB, IEEE 1394, PCMCIA, CP or Bluetooth interface. The present embodiment uses the USB interface.

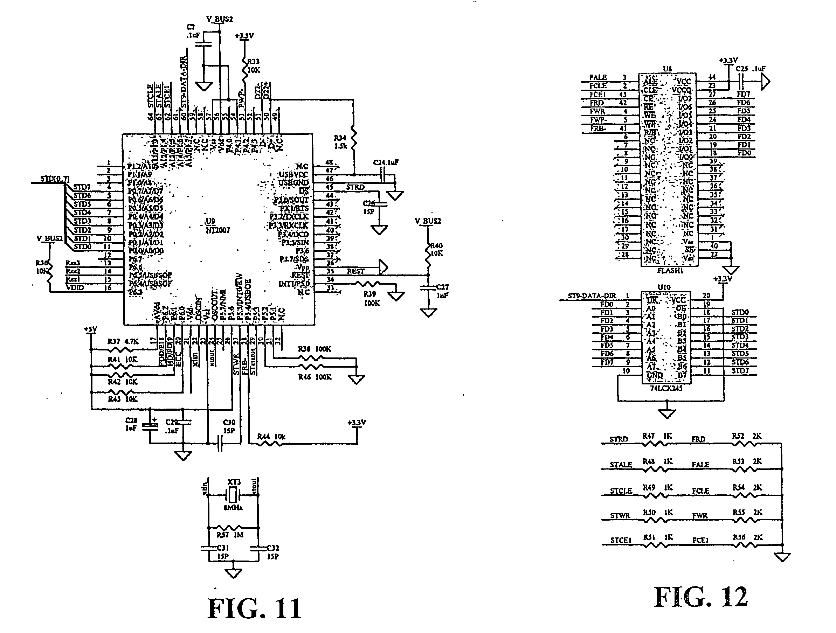

The controller module 17 includes a wireless data communication control module and a storage control module. The wireless data communication control module and the storage control module can be separate, and can be integrated. The first firmware software is affirmed in the controller module 17. Its main function is to achieve the communication with the wireless transceiver module 8 through the standard RS232 serial-port. It has the function of controlling the serial, parallel or wireless communication interface, and achieves the communication with the host through the interface module 5. As shown in Fig.7, the module uses a 64PIN private processing chip U5 that is the microprocessor with the function of USB interface control. The XT2 in the drawing is a 6MHz crystal oscillator. The second firmware is also affirmed in the controller module 17. Its main function is to control the interface, achieve the communication with the interface module 5, and as the main control chip of the storage media (e.g. a flash memory) module 11 to control the operations, such as, read and write of the storage media. As shown in Fig.11, the module uses a 64PIN NT2007 private microprocessor U9 which has the function of USB interface control. The XT3 in the drawing is an 8MHz crystal oscillator. The first firmware and the second firmware can be separate, and can also be integrated.

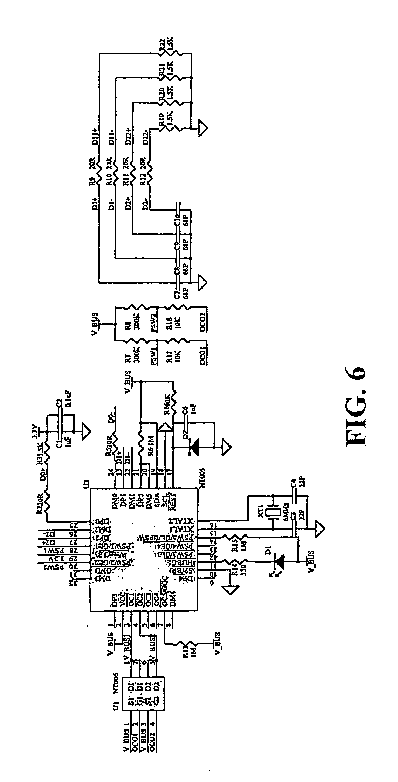

When the wireless data communication control module and the storage module in the controller module 17 are separate, the interface module 5 is connected with USB HUB module 6. The main function of USB HUB module 6 is to provide two downward USB ports for the controller module 17 to connect the wireless data communication control module and the storage control module in the controller module 17 to achieve the communication between the controller module 17 and interface module 5. As shown in Fig.6, the USB HUB module 6 uses a NT005 chip to achieve the USB HUB function. Chip NT006 is the current protection chip for NT005. The external clock frequency is 6MHz.

The main function of the wireless transceiver module 8 is to achieve the communication between the controller module 17 and the wireless network subscriber identification module through the wireless network subscriber identification module, and to receive or transmit the data information of SMS, DATA, FAX, voice and the like. In the present invention, the wireless transceiver module 8 is connected with the module 4 through a universal SIM card interface, connected with the controller module 17 through a standard RS232 interface, and connected with a transceiver antenna 9 through a high-frequency feeding line of 50 ohm. As shown in Fig. 8, the wireless transceiver module 8 can use a chip of Siemens TC35 module, and the wireless data communication device of the present invention here can be operated in a GSM network. The wireless transceiver module 8 can use WavecomWIS02C module as shown in Fig.9, and the wireless data communication device can work in a GSM network and GPRS network. The wireless transceiver module 8 can also use UbineticsGM400/GM401 module as shown in Fig.10, and the wireless data communication device of the present invention here can operate in a GSM network and a GPRS network. The wireless transceiver module 8 can also use other modules such that the wireless data communication device of the present invention is capable of operating in the CDMA and other networks.

The function of transceiver antenna 9 is to match the output impedance of the wireless transceiver module with the high frequency feeder wire. The universal dual frequency mobile phone antenna of 50 ohm can be used to achieve the transceiver antenna 9. The transceiver antenna 9 can be separate, and can also be integrated with the wireless transceiver module 8.

The function of the storage media module 11 is to store data files and all kinds of information. This module includes the level conversion circuit of data signals and control signals. The storage media can be a semiconductor storage media, which includes, but not limit to, the flash memory, MRAM, DRAM, SDRAM, EEPROM, SRAM, and EPROM. As shown in Fig.12, the module uses FLASH 1 chip U8 and 74LCX245 chip U10, wherein U10 is used to achieve the level conversion of the data signals FDO-FD7 for converting the +5V signal level into +3.3V signal level. The resistance network R47, R48, R49, R50, R51, R52, R53, R54, R55, R56 is used to control the level conversion of the control signal, that is, to convert the +5V signal level into +3.3V signal level.

The transmitter/receiver module 12 has the functions of receiving voice signals, converting the voice signals into electrical signals, or converting the electrical signal into the voice signals so as to send these signals out through a speaker. The connection between the transmitter/receiver module 12 and the wireless transceiver module 8 can send the analog signals bi-directionally. The transmitter/receiver module 12 can use various types of modules in market.

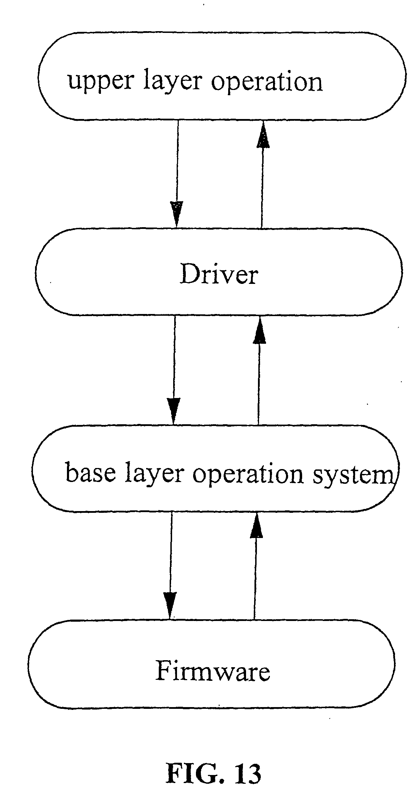

The firmware of the present invention is a combination of the software and the hardware, and is the software affirmed in the microprocessor. After the microprocessor is powered up to reset, whereby a series of the operations required by the designer are achieved by running the firmware affirmed in the microprocessor. The position of the firmware in the application software of the present invention, and the relationship between the firmware and the operating system and the driver are shown in Fig. 13. The driver of the present invention runs in the operating system of the host computer system.

The functions that the first firmware mainly performs include:
a. power-on and initialization, wherein the serial port of the microprocessor is set to transmit/receive interrupt serially, and the serial baud rate can be 9600bit/s;
b. the setting of the USB system, wherein the setting of USB interface is the message transfer interface and data interface, the message transfer interface being defined as the interrupt transmission, and the data interface defined as the batch transmission; a manufacturer user-defined class (lass), the object of which is to transfer the subscriber identification code;
c. the control of the wireless transceiver module 8;
d. the performance of the bidirectional transmission of the data between the wireless transceiver 8 and the USB interface.

The present invention uses the 32K SRAM as the data buffer, and thus the speed of receiving and transmitting data increases significantly.

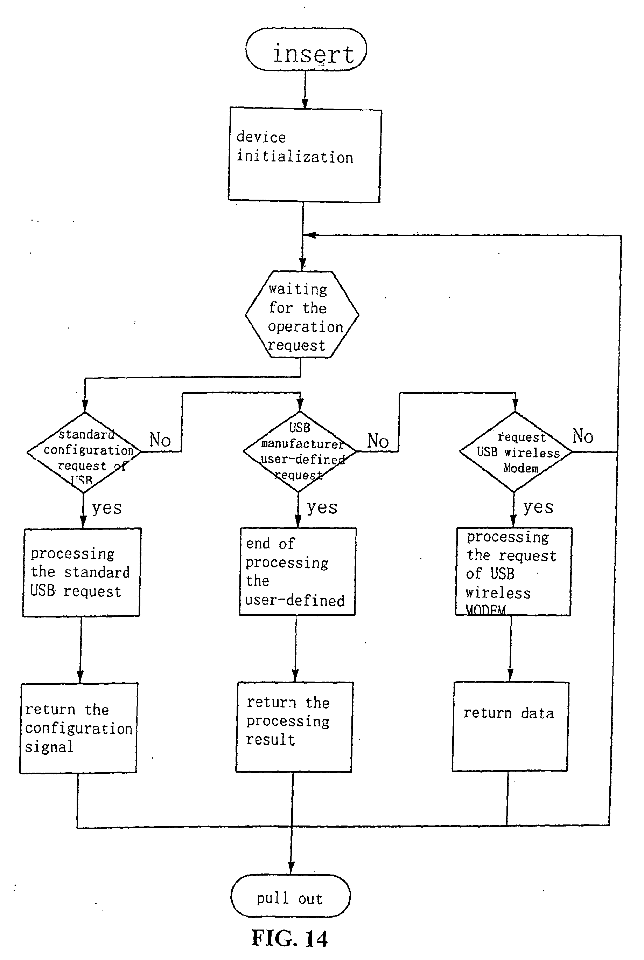

The operating flow of the first firmware is shown in Fig.14.

When the user inserts the wireless data communication device of the present invention into the corresponding interface of the computer, the operating system will find the driver of the device automatically at the time of power-on, and the microprocessor starts executing immediately the firmware affirmed therein. It includes the following steps:
a. initializing the microprocessor and its peripheral interface chips;
b. the operating system checking the control path of the USB interface chip, the USB interface chip generating an interrupt to the microprocessor at the same time, and then the microprocessor coming into contact with the operating system by operating the USB interface chip, whereby after a series of standard USB configuration, all of the drivers suitable for the wireless data communication devices of the present invention are loaded;
c. the microprocessor accessing the identification code module 3 with the request of the manufacturer user-defined configuration so as to give a unique code to the operating system, while the code can be applied flexibly in the application program, such as identification, encryption and the like, and the microprocessor controls the operating state of the wireless transceiver module 8 according to the request of the operating system; and
d. the microprocessor transmitting the data between the base layer operating system and the wireless transceiver module, when there is any request for the data transmission.

The operating flow of the second firmware of the present invention is shown in Fig.5. The firmware initializes the device and indicates the configuration of the mobile storage device to the operating system after the wireless data communication device and the storage device are connected into the data processing system, and it waits for the operating request, processes the standard USB operation and the special operation of the flash memory, respectively, and then returns the processing result, state or other information to the host operating system through the USB interface to assist the performance of the standard USB operation and the special operation of the flash memory, and keeps on waiting for the operating request.

The present invention can have a driver that can achieve the communication function and the storage function. Generally speaking, the common driver provides the software interface for connecting to the computer hardware, and is loaded as part of the operating system. Thus, the user application software can access the hardware in a standard manner without considering how to control the hardware. The driver of the present invention provides such functions as well. It makes the application software operate the device of the present invention through the universal programming interface. For instance, the wireless data transmit/receive driver has the function of establishing a network connection, transmitting/receiving short messages, etc., and has the function of cooperating with the host operating system to process the activities of the installation, removal of the hardware. Preferably, the driver uses the USB standard for the improvement of the university and the reliability of the product of the present invention. One of the main tasks of the driver that are different from the driver of the ordinary computer peripheral equipments is to have the data format of the USB interface mapped onto the data format of the RS232 serial interface. Thus, the present invention is a serial device in terms of the operating system and the application program. Theoretically, a conventional application program based on the serial port can be applied to the present invention without modification. This requires the driver of the present invention to establish a virtual RS232 serial interface. Moreover, the driver should process the situation, such as, multi-port installation, sudden removal of devices, etc.

The major steps of the establishment of the virtual serial port are as follows:
Step 1: A Bus Driver is programmed for providing a function drive for the present invention and enumerating a Physical Device Object (PDO) of the serial port. The first step for establishing the virtual serial port is to enumerate it in the driver, and then establish a new device object to represent the virtual port after receiving the proper notice.
   After the establishment of the virtual port, the bus driver informs the Input/Output Manager by calling IO Invalidate Device Relations, and then returns the Unique Hardware ID after receiving IRP_QUERY_ID. It can ensure to indicate the user to choose a new position for setting up a file during the installation. Meanwhile, the driver should indicate the device as the original device when it receives IRP_MN_QUERY_CAPABILITIES.
Step2: The installation file is provided to install the new device, and inform the input/output manager that there is no function driver in the device stack. Since it is an original device, the new physical device object processes the input/output request package directly.
Step3: In order to let the existing application program based on the serial port have the capability of accessing the device of the present invention, it also needs: 1. to establish a character name connection pointing to the virtual port device when the IRP_MN_START_DEVICE is received; and
   2. to establish the registration item of class REG_SZ in the serial mapping position in the registration form, of which the name is the device name of the virtual port device and the number is the port number of the virtual port device assigned by the class installation server.
Step 4:
   The driver can start receiving the input/output request package from any serial application program (e.g., Hyperterminal, Dial_Up Networking, etc.) now. The virtual port can be the full-size serial port by processing various Serial IOCTL IRPs.

In the above description, IRP_XXX refers to the name of the IOCTL IRPs. The others that are not explained are all function names, such as IO Register Device Interface, etc.

USB protocol supports plug-in or out, but in the first place the user should execute the safely remove hardware application before the device is removed safely. This program will inform the operating system (e.g. Windows) that the user intends to delete the device, and the operating system will interrupt the current data transmission and uninstall the device driver. If the user directly removes the device without executing the safely remove hardware application in advance (that is usually referred to Surprise Removal), it may cause the data lose or the system collapse because the application program here still has the Device handle which is impermissible by PnP Manager. The present invention solves this problem in the driver, that is, by informing the application program to release the Device handle at a proper time.

Windows 2000 and Windows 98 provide a method to inform the user model and the kernel model of the PnP event so that the application program can monitor and control the change of configuration of the hardware and the power supply in the system through processing the message WM_DEVICECHANGE, and can test easily the device interface that permit enabling or disabling a certain driver to register.

The practical implementation can be divided into two parts, that is, the device driver and the application program.

The device driver: when the physical device object receives IRP MN-START DEVICE, an interface, GUID (Globally Unique Identifier) can be registered by calling the function of IO Register Device Interface, and then the interface will be enabled by calling the function of IO Set Device Interface State.

The application program: the present thread including a window and a message cycle is established or used, from which the function Register Device Notification is called, and then PnP manager will send a WM_DEVtCECHANGE message to the window when anyone enables or disenables the driver interface GUID. At present, the application program should note that wParam (event code) equals to DBT_DEVICEQUERYREMOVE, wherein the device type is WM_DEVICECHANGE message of DBT_DEVTYP_HANDLE. The message means that the interface is going to be disenabled. Therefore, its device handle should be closed. Then, the TRUE should be returned unconditionally in the process program of the message.

The device of the present invention can be installed in a multi port that refers to a data processing system having multiple wireless data communication devices of the present invention, and the concurrent access is present here. The concurrent access permits the application program to use asynchronous access mode for reading/writing the same device, which can improve the availability of the device, enhance the throughput of the output/input of the system. Using this technique, the present invention can receive/transmit short messages in batches without block. The function is very suitable for group users. The realization of the concurrent access is that first the Exclusive mode should be designated when the device object is established, and second when the read/write request (IRP_MJ_READ and IRP_MJ_WRITE) from the upper software (application program) is received, they are queued, and they are finished at a proper time.

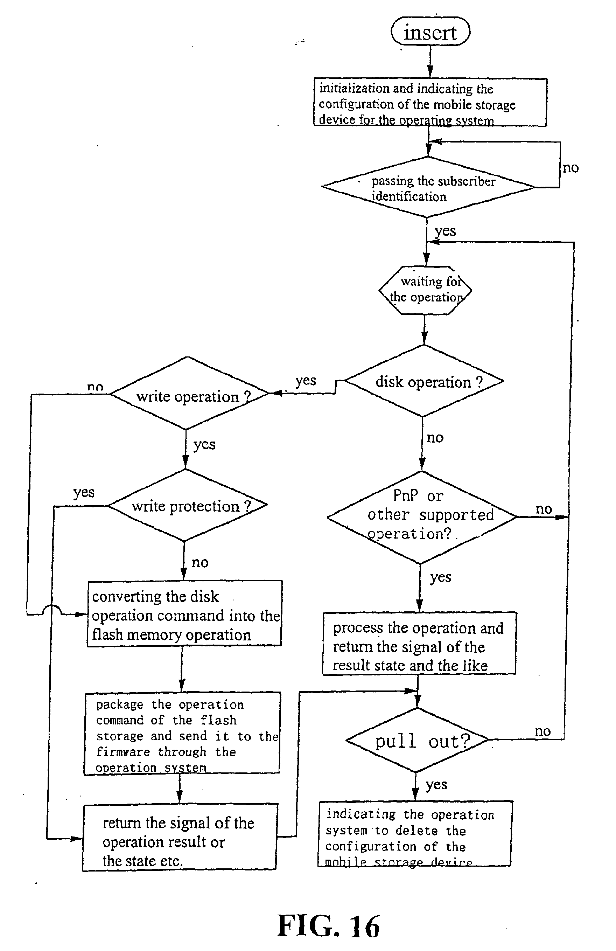

The flow of storing the driver of the present invention is shown in Fig. 16. The driver controls the mobile communication device to achieve the initialization and indicates the configuration of the mobile storage device to the operating system, waits for the operation request after passing the subscriber identification, processes the operation request of the write storage module 11 (which can be a flash memory), packages the storage operation commands and sends it to the firmware through the operating system, and processes the PnP or other supported operation simultaneously. The operation request is waited for before the device of the present invention is pulled out, and the operating system is indicated to delete the configuration of the mobile storage device after it is pulled out. The driver achieving the communication function and the driver achieving the storage function can be separate, and be combined as well.

The present invention can use a USB interface to connect with the host and can be plug and play, and can associate the universal serial bus, mobile storage technique and the mobile communication technique, use directly the communication service provided from the mobile telephone corporation, achieve the data transmission between the wireless mobile telephone and computer, provide an excellent and reliable performance of the mobile storage and the wireless communication and the function of the wireless access, receive and transmit the wireless data information, including speech, data, short message, control information, etc. The device of the present invention can make the computer to be the public wireless network terminal of the Internet.

The present invention can provide the power supply (4.5V-5.5V) directly through USB bus, to meet the USB1.1/2.0 standard, and can be applied to GSM, GPRS, CDMA, WCDMA, CDMA2000, CDPD and other wireless communication networks. It has the function of integrating the electronic identification. Each wireless data communication device of the present invention has a unique serial number.

The present invention can be applied to the financial field, such as, the bank, securities, insurance, futures, and has changed the original wire network to the wireless network, which is faster, safer, more convenient and more economical. The present invention can also be applied to the civil aviation, railroad, public security, environmental protection, petrochemical industry, maritime industry and other industries, such as, remote sale of tickets, remote control, etc.

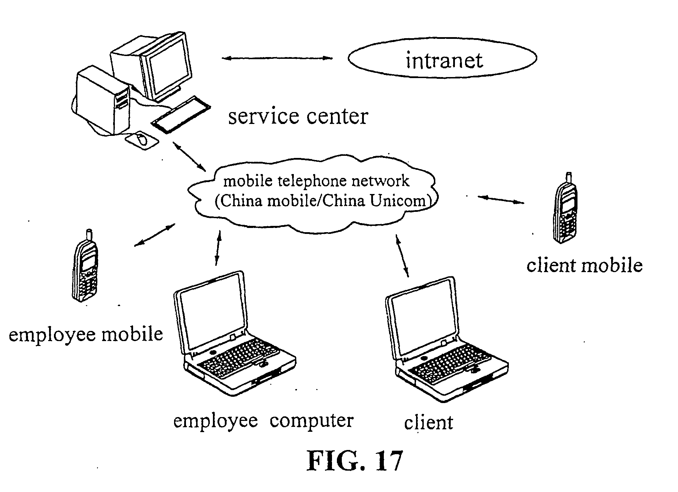

An applied typical network diagram of the present invention is shown in Fig.17. The service center of the short message service platform having software connects the intranet through the network cable, and can exchange the short messages with the mobile of the employee or the clients and the computers setting the wireless data communication device of the present invention. These computers setting the wireless data communication device of the present invention can also connect with Internet.

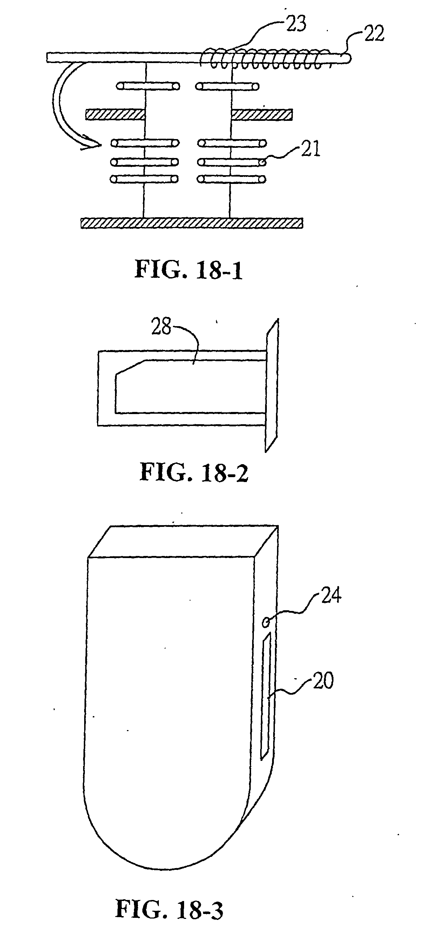

The insertion structural diagram of SIM card of the present invention is shown in Fig. 18. A narrow slot (20) is designed on the wireless data communication device, and an electrical contact (21), a lever (22) and a spring (23) are used in the slot for inserting and electrically connecting the SIM card (28), and a manipulative point (24) is set beside the narrow slot (20). Pressing the manipulative point (24) can spring the inserted SIM card out.

The application of the present invention can make the computer connect directly to the Internet in the wireless mode. Therefore, many kinds of business development on the Internet will not be restricted by the location, but performed in the wireless mode such that the computer becomes the super wireless mobile terminal. Using special software, the encryption storage function is achieved by the subscriber identification code of the present invention to encrypt the software, data, communication and the like, so as to ensure the safety of the critical business.

For example, the short message service platform of developing the software provides a client service system at the bank, securities business and enterprise, which use the mobile telephone communication mode, such as, the current short message communication, to provide the convenient and flexible information service to the clients or employees. It can directly apply the short message including the transactional type and parameters for the process without any specially provided software. Moreover, the service software can be carried in the storage unit of the wireless data communication device of the present invention that does not require any software download, installation, but can be PnP, and be used and kept conveniently. The entities using it may directly manufacture and send out the whole set of the system, without any need of dialing, but still low price. It covers wide application scope, and can use software/hardware encryption to further ensure the security of business, and thus is personalized.

## Claims

1. A method of wireless data communication of a data processing system, comprising the following steps of:
A. providing a wireless data communication device, in which installed are a wireless transceiver module (8) capable of receiving or transmitting data information, and a controller module (17) for controlling the wireless data communication device and an interface module (5), wherein physically the various modules can be present separately, and can also be integrated into one or two modules;
B. establishing an information exchange channel between the wireless data communication device and the data processing system based on a series, parallel or wireless communication interface; and
C. the wireless data communication device using the wireless transceiver module (8) to transmit or receive the data information via a public wireless network.

2. The method of claim 1, **characterized by** further comprising the step of:
D. establishing a storage media module (11) in the wireless data communication device, which provides the wireless data communication device with an external storage function for the data processing system.

3. The method of claim 1, **characterized by** further comprising the step of:
E. setting the wireless data communication device to have identical codes that are stored in an identical code module (3).

4. The method of claim 1, **characterized by** further comprising the step of:
F. setting a driver of the wireless data communication device in the data processing system for controlling and driving the wireless data communication device.

5. The method of claim 1, **characterized in that** the serial or parallel or wireless communication interface is USB (Universal Serial Bus), IEEE1394, PCMCIA, CP or Bluetooth interface.

6. The method of claim 1, **characterized in that** the public wireless network is GSM, GPRS, CDMA, WCDMA, CDMA2000 or CDPD network.

7. The method of claim 1, **characterized in that** an operational power supply of the wireless data communication device is connected via the serial or parallel interface.

8. The method of claim 1, **characterized in that** a function of indicating the wireless data communication device is realized by an indicating element on a operating mode indicating module (2).

9. The method of claim 8, **characterized in that** the indicating element is a LED, LCD, vibrator or sounder.

10. The method of claim 1, **characterized in that** the write protection function is provided for preventing the data from being written into the storage media module (11).

11. The method of claim 1, **characterized in that** a narrow slot is provided in the wireless data communication device, an electrical contact is used in the slot for insertion of a SIM (Subscriber Identity module) card, and a manipulative point is set beside the narrow slot, whereby pressing the manipulative point can spring the inserted SIM card out.

12. A wireless data communication device of a data processing system, comprising a serial, parallel or wireless communication interface module (5) for connecting the data processing system and the device, a controller module (17), and a wireless transceiver module (8), wherein the controller module (17) is connected with the interface module (5) and the wireless transceiver module (8), and supports the flow of data information, and the controller module (17) coordinates the operation of the various modules.

13. The device of claim 12, **characterized by** further comprising a storage media module (11) that uses a flash memory preferably.

14. The device of claim 12, **characterized by** further comprising an identical code module (3) for storing identification codes.

15. The device of claim 12, **characterized in that** the serial or parallel or wireless communication interface is USB, IEEE1394, PCMCIA, CF or Bluetooth interface.

16. The device of claim 12, **characterized in that** an operational power supply of the wireless data communication device is connected via the serial or parallel interface.

17. The device of claim 12, **characterized by** comprising an indicating element for indicating the operating state of the wireless data communication device.

18. The device of claim 17, **characterized in that** the indicating element is a LED, LCD, vibrator or sounder.

19. The device of claim 12, **characterized by** comprising a write protection switch for preventing the data from being written into the storage media module (11).

20. The device of claim 12, **characterized in that** a narrow slot (20) is provided on the wireless data communication device, an electrical contact (21), a lever (22) and a spring (23) are used in the slot for inserting and connecting electrically a SIM card (28), and a manipulative point (24) is set beside the narrow slot (20), whereby pressing the manipulative point (24) can spring the inserted SIM card out.
